# EUROPÄISCHE PATENTSCHRIFT

(11) **EP 2 998 203 B1**
(45) Veröffentlichungstag und Bekanntmachung des Hinweises auf die Patenterteilung: **06.09.2017**
(21) Anmeldenummer: 15001254.0
(22) Anmeldetag: 28.04.2015
(51) Int. Cl.: B62D 7/18, B62D 7/20

(54) **SPURHEBEL FÜR EINE LENKMECHANIK EINES KRAFTFAHRZEUGS**
KNUCKLE ARM FOR A GUIDANCE MECHANISM OF A MOTOR VEHICLE
BIELLETTE DE DIRECTION POUR UN MÉCANISME DE DIRECTION D'UN VÉHICULE AUTOMOBILE

(30) Priorität: 13.08.2014 DE 102014012091
(43) Veröffentlichungstag der Anmeldung: 23.03.2016
(73) Patentinhaber: MAN Truck & Bus AG, 80995 München (DE)
(72) Erfinder: Sattler, Steve, 80992 München (DE); Toledano Saez, Sara, 85057 Ingolstadt (DE)
(74) Vertreter: v. Bezold & Partner Patentanwälte - PartG mbB

(56) Entgegenhaltungen:
- EP-A2- 2 141 062
- WO-A1-01/81153

## Beschreibung

Die Erfindung betrifft einen Spurhebel für eine Lenkmechanik für ein Kraftfahrzeug, insbesondere ein Nutzfahrzeug, wie zum Beispiel ein Lastkraftwagen oder ein Omnibus.

Aus der EP 2 141 062 A2 ist ein Spurhebel für ein Radfahrzeug bekannt, mit Achsschenkellenkung, welches wahlweise mit Vorderradlenkung oder Allradlenkung lenkbar ist, wobei der jeweilige Spurhebel über eine hinsichtlich ihrer Länge veränderbare Spurstange mit einer Lenkeinrichtung des Radfahrzeuges verbindbar ist, mit den Merkmalen: der Spurhebel umfasst mindestens zwei miteinander verbundene Hebelteile; das erste Hebelteil ist bei der bestimmungsgemäßen Verwendung des Spurhebels mit dem Achsschenkel, auf den der Spurhebel wirken soll, fest verbindbar; das zweite Hebelteil ist mit einem ersten Ende mit dem ersten Hebelteil lösbar verbunden und bei der bestimmungsgemäßen Verwendung des Spurhebels mit seinem gegenüberliegenden zweiten Ende mit der dem Spurhebel zugeordneten Spurstange verbindbar.

Insbesondere Spurhebel für Nutzfahrzeuge sind üblicherweise als massive, schwere Guss- oder Schmiedekonstruktionen ausgeführt. Obwohl aus Guss- oder Schmiedekonstruktionen hergestellte Spurhebel in der Praxis gut funktionieren, sind sie relativ teuer und weisen zudem ein relativ hohes Gewicht auf.

Eine Aufgabe der Erfindung ist es, einen Spurhebel für eine Lenkmechanik für ein Kraftfahrzeug, insbesondere ein Nutzfahrzeug, zu schaffen, der kostengünstig und zudem leichtgewichtig ist.

Diese Aufgabe kann mit den Merkmalen des Hauptanspruchs gelöst werden. Vorteilhafte Weiterbildungen der Erfindung können den Unteransprüchen und der folgenden Beschreibung entnommen werden.

Die Erfindung schafft einen Spurhebel für eine Lenkmechanik für ein Kraftfahrzeug, vorzugsweise ein Nutzfahrzeug, wie zum Beispiel einen Lastkraftwagen oder einen Omnibus.

Der Spurhebel umfasst ein erstes Blechelement, ein zweites Blechelement und ein drittes Blechelement. Das dritte Blechelement ist mit dem ersten Blechelement und dem zweiten Blechelement verschweißt und weist zweckmäßig zwei voneinander separierte und/oder ebene Kontaktflächen zur Verbindung mit einer Radnabe auf.

Der Spurhebel ist insbesondere kostengünstig, einfach zu fertigen, mit weniger Materialverlust als durch Zerspanen herzustellen und weist ein geringes Gewicht auf.

Es ist möglich, dass das dritte Blechelement als ein gebogenes (z. B. gekantetes, umgeformtes, etc.) Blechelement ausgeführt ist. Das dritte Blechelement kann z. B. einen zumindest im Wesentlichen U-förmigen Abschnitt aufweisen, von dem sich zwei die Kontaktflächen aufweisende Seitenabschnitte zweckmäßig nach außen erstrecken.

Das erste Blechelement und das zweite Blechelement hingegen sind vorzugsweise als ebene, insbesondere nicht gebogene, Blechelemente ausgeführt. Das erste Blechelement und das zweite Blechelement können zumindest im Wesentlichen U-förmig ausgebildet sein.

Das erste Blechelement und das zweite Blechelement können z. B. baugleich oder asymmetrisch ausgeführt sein.

Das dritte Blechelement kann über Steck- und/oder Hakenverbindungen an das erste Blechelement und das zweite Blechelement gekoppelt sein.

Das dritte Blechelement ist vorzugsweise mit einem Randabschnitt an einen Randabschnitt des ersten Blechelements mittels einer zweckmäßig unterbrochenen Schweißnaht verscheißt. Alternativ oder ergänzend kann das dritte Blechelement mit einem Randabschnitt an einen Randabschnitt des zweiten Blechelements zweckmäßig mittels einer durchgehenden Schweißnaht verschweißt sein.

Die Kontaktflächen umfassen zweckmäßig Durchgangsöffnungen, an die Hülsen zur Befestigung der Radnabe anschließen. Die Durchgangsöffnungen und die Hülsen erstrecken sich vorzugsweise koaxial zueinander. Die Hülsen zur Verbindung mit der Radnabe sind vorzugsweise als Durchgangsbohrungen ausgeführt.

Die Hülsen zur Verbindung mit der Radnabe sind vorzugsweise mit dem ersten Blechelement und dem zweiten Blechelement verschweißt.

Der Spurhebel kann des Weiteren eine Hülse zur Verbindung mit einer Spurstange umfassen. Die Hülse zur Verbindung mit der Spurstange ist vorzugsweise ebenfalls mit dem ersten Blechelement und dem zweiten Blechelement verschweißt.

Die Hülse zur Verbindung mit der Spurstange hat vorzugsweise eine zweigeteilte Innenkontur mit einem zweckmäßig im montierten Zustand oberen zylindrischen Teil und einem zweckmäßig im montierten Zustand unteren kegelförmigen Teil. Die Außenkontur der Hülse ist allerdings vorzugsweise zylindrisch und zwar zweckmäßig zumindest teilweise über den zylindrischen Teil und den kegelförmigen Teil.

Es ist möglich, dass in die Hülse zur Verbindung mit der Spurstange eine Büchse eingesetzt ist. Die Außenkontur der Büchse entspricht zweckmäßig der Innenkontur des zylindrischen Teils der Hülse. Die Büchse dient zweckmäßig zur Verschraubung mit dem Kopf der Spurstange. Der kegelförmige Teil der Hülse dient zweckmäßig zur vorzugsweise formschlüssigen Aufnahme des Kopfes der Spurstange und bildet somit insbesondere das Spurstangenkopfgehäuse. Der Kopf der Büchse (z. B. ein Sechskantkopf) liegt vorzugsweise auf der Außenfläche der Hülse auf.

Der Spurhebel umfasst ferner vorzugsweise eine Verstärkungswand, die zwischen den Kontaktflächen, insbesondere zwischen den Hülsen zur Verbindung mit der Radnabe und/oder an den Basisabschnitten der U-Form des ersten Blechelements, des zweiten Blechelements und des dritten Blechelements angeordnet ist. Die Verstärkungswand ist vorzugsweise mittels Steck- und/oder Schweißverbindungen mit dem ersten Blechelement, dem zweiten Blechelement und/oder dem dritten Blechelement verbunden. Die Verstärkungswand weist vorzugsweise an ihrer freien Seite eine Aussparung auf.

Alternativ oder ergänzend zu der zuvor erwähnten Verstärkungswand kann der Spurhebel eine andere Verstärkungswand aufweisen, die zwischen einer Hülse zur Verbindung mit der Radnabe und der Hülse zur Verbindung mit der Spurstange angeordnet ist. Die Verstärkungswand ist vorzugsweise mittels Steck- und/oder Schweißverbindungen mit dem ersten Blechelement, dem zweiten Blechelement und/oder dem dritten Blechelement verbunden. Alternativ oder ergänzend kann sie mit der zuvor genannten Hülse zur Verbindung mit der Radnabe verschweißt sein.

Es ist möglich, dass das dritte Blechelement zumindest im Wesentlichen rechtwinklig zu dem ersten Blechelement und dem zweiten Blechelement angeordnet ist und zweckmäßig den Abstand zwischen dem ersten Blechelement und dem zweiten Blechelement vorgibt.

Das erste Blechelement und das zweite Blechelement erstrecken sich zweckmäßig in zwei voneinander beabstandeten parallelen Ebenen. Das dritte Blechelement erstreckt sich vorzugsweise in einer Ebene, die die Ebenen des ersten Blechelements und des zweiten Blechelements im Wesentlichen rechtwinklig schneidet.

Das erste Blechelement, das zweite Blechelement und das dritte Blechelement sind vorzugswiese so angeordnet, dass sie zusammen einen im Wesentlichen U-förmigen Querschnitt bilden und somit zweckmäßig ein zu zumindest einer Seite hin offenes Bauteil darstellen.

Das erste Blechelement, das zweite Blechelement, das dritte Blechelement und/oder die Verstärkungswände weisen vorzugsweise eine Stärke von < 14 mm, < 12 mm, < 10 mm, < 9 mm oder sogar < 8 mm auf. Sogar Stärken von < 6 mm sind möglich.

Zu erwähnen ist, dass das Merkmal "U-förmig" im Rahmen der Erfindung breit auszulegen ist und insbesondere Ausführungsformen mit einem Basisabschnitt, von dem zwei Flanschabschnitte abstehen, umfasst.

Zu erwähnen ist ferner, dass das erste Blechelement, das zweite Blechelement und das dritte Blechelement insbesondere die zweckmäßig dreiseitige Grundstruktur und/oder Außenkontur des Spurhebels bilden.

Die Erfindung ist nicht auf einen Spurhebel beschränkt, sondern umfasst auch eine Lenkmechanik für ein Kraftfahrzeug, vorzugsweise ein Nutzfahrzeug, zum Beispiel einen Lastkraftwagen oder einen Omnibus, mit einem wie hierin beschriebenen Spurhebel.

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht eines Spurhebels gemäß einer Ausführungsform der Erfindung;
- Figur 2: zeigt eine andere perspektivische Ansicht des Spurhebels der Figur 1,
- Figur 3: zeigt eine wiederum andere perspektivische Ansicht des Spurhebels der Figuren 1 und 2, und
- Figur 4: zeigt eine Schnittansicht eines Details des Spurhebels der Figuren 1 bis 3.

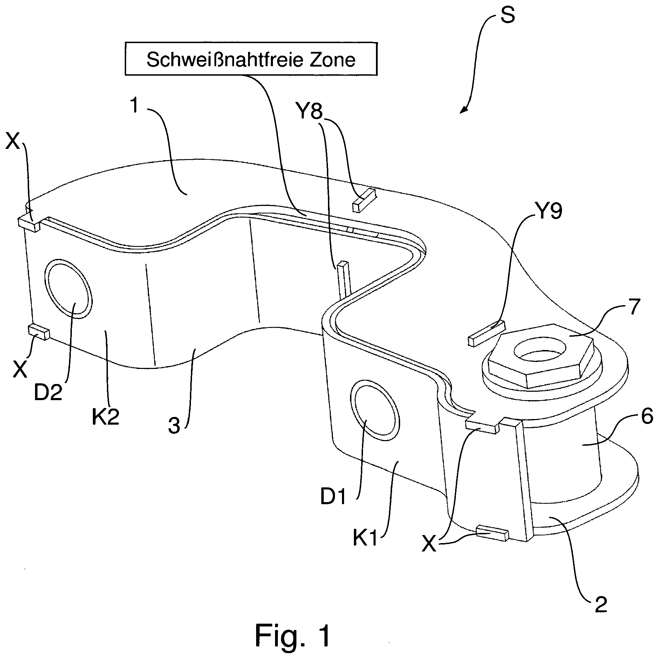

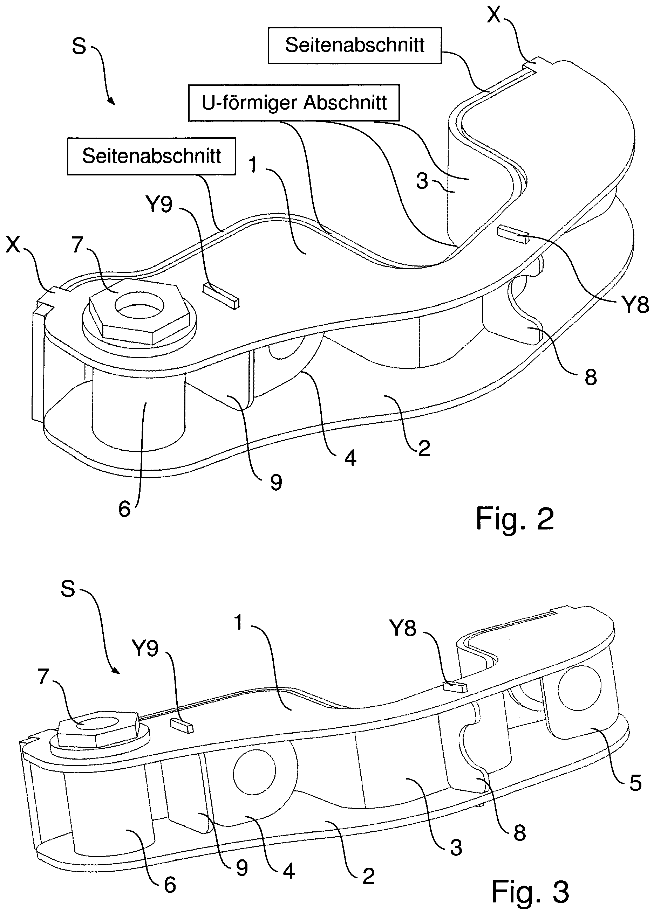

Die Figuren 1 bis 3 zeigen verschiedene perspektivische Ansichten eines Spurhebels S für eine Lenkmechanik eines Nutzfahrzeugs gemäß einer Ausführungsform der Erfindung. Der Spurhebel S wird nachfolgend unter Bezugnahme auf die Figuren 1 bis 3 beschrieben.

Der Spurhebel S dient wie üblich zur Verbindung einer Radnabe mit einer Spurstange (nicht gezeigt). Seine Hauptfunktion ist wie ebenfalls üblich, die Axialbewegung der Lenkmechanik (z. B. Zahnstangenlenkung) in eine Drehbewegung der Radnabe zu wandeln oder umgekehrt.

Der Spurhebel S umfasst ein erstes Blechelement 1, ein zweites Blechelement 2 und ein drittes Blechelement 3, die die dreiseitige Grundstruktur und Außenkontur des Spurhebels S bilden. Das dritte Blechelement 3 ist einerseits mit dem ersten Blechelement 1 verschweißt und andererseits mit dem zweiten Blechelement 2 verschweißt. Das dritte Blechelement 3 ist über Steck- und/oder Hakenverbindungen X an das erste Blechelement 1 und das zweite Blechelement 2 gekoppelt, was den Schweißvorgang erleichtert und eine korrekte Anordnung sicherstellt.

Das dritte Blechelement 3 umfasst zwei voneinander beabstandete ebene Kontaktflächen K1, K2 zur Verbindung mit der nicht gezeigten Radnabe.

Das dritte Blechelement 3 ist im Wesentlichen rechtwinklig zu dem ersten Blechelement 1 und dem zweiten Blechelement 2 ausgerichtet und gibt den Abstand zwischen dem ersten Blechelement 1 und dem zweiten Blechelement 2 vor. Das erste Blechelement 1 und das zweite Blechelement 2 erstrecken sich in zwei beabstandeten parallelen Ebenen.

Das dritte Blechelement 3 ist als ein gebogenes Blechelement ausgeführt und weist einen U-förmigen Abschnitt auf, der aus einem inneren Basisabschnitt und zwei äußeren Flanschabschnitten gebildet wird. Von den Flanschabschnitten erstrecken sich zwei die Kontaktflächen K1, K2 aufweisende Seitenabschnitte nach außen. Das erste Blechelement 1 und das zweite Blechelement 2 sind hingegen als ebene, nicht gebogene, zweckmäßig baugleiche und im Wesentlichen U-förmige Blechelemente ausgebildet, ebenfalls mit einem inneren Basisabschnitt und zwei äußeren Flanschabschnitten. Die U-Form des dritten Blechelements 3 ist im Wesentlich rechtwinklig zu der U-Form des ersten Blechelements 1 und des zweiten Blechelements 2 ausgerichtet.

Das dritte Blechelement 3 bildet mit dem ersten Blechelement 1 und dem zweiten Blechelement 2 einen im Wesentlichen U-förmigen Querschnitt und zwar vorzugsweise über seine gesamte Längserstreckung, so dass die dadurch gebildete Grundstruktur auf zumindest der zum dritten Blechelement 3 abgewandten Seite offen ausgebildet ist.

Das dritte Blechelement 3 ist mit einem Randabschnitt einerseits an einen Randabschnitt des ersten Blechelements 1 mittels einer unterbrochenen Schweißnaht verschweißt, so dass insbesondere der zuvor erwähnte Basisabschnitt der U-Form des dritten Blechelements 3 zumindest teilweise schweißnahtfrei bleibt, was in Figur 1 durch die schweißnahtfreie Zone angedeutet ist. Das dritte Blechelement 3 ist mit einem Randabschnitt andererseits an einen Randabschnitt des zweiten Blechelements 2 verschweißt, allerdings mittels einer durchgehenden Schweißnaht.

Die Kontaktflächen K1, K2 sind mit Durchgangsöffnungen D1, D2 versehen, an die Hülsen 4, 5 zur Befestigung der Radnabe anschließen und die zugleich die Kontaktflächen K1, K2 unterstützen. Die Hülsen 4, 5 sind mit dem ersten Blechelement 1 und dem zweiten Blechelement 2 verschweißt. Die Hülsen 4, 5 sind zweckmäßig gewindefrei ausgeführt.

Der Spurhebel S umfasst zusätzlich zu den Hülsen 4, 5 eine Hülse 6 zur vorzugsweise mittelbaren Verbindung mit einer Spurstange. In die Hülse 6 ist eine Büchse 7 mit Innengewinde zur Verschraubung mit der Spurstange eingesetzt. Die Büchse 7 liegt mit einem Kopfteil (z. B. Sechskantkopf) auf der Außenfläche der Hülse 6 auf. Die Hülse 6 erstreckt sich im Wesentlichen rechtwinklig zu den Hülsen 4, 5 und ist ebenfalls mit dem ersten Blechelement 1 und dem zweiten Blechelement 2 verschweißt.

Die konstruktive Ausführung von Hülse 6 ist zweckmäßig so gewählt, da der Kugelzapfen der Spurtstange nicht verändert wurde. Bei Änderung des Kugelzapfens kann die Hülse 6 z. B. durch eine 6-Kant Mutter oder eine andere geeignete Befestigungsstruktur ersetzt werden.

Der Spurhebel S umfasst zur Steifigkeitserhöhung zumindest zwei Verstärkungswände 8, 9. Die Verstärkungswand 8 ist zwischen den Kontaktflächen K1, K2, insbesondere den zwei Hülsen 4, 5, angeordnet und mittels Steckverbindungen Y8 und Schweißverbindungen mit dem ersten Blechelement 1 und dem zweiten Blechelement 2 und optional dem dritten Blechelement 3 verbunden. Die Verstärkungswand 8 dient zur Vergrößerung des Widerstandsmoments des Spurhebels S. Die Verstärkungswand 9 ist zwischen der Hülse 4 und der Hülse 6 angeordnet und ist ebenfalls mittels Steckverbindungen Y9 und Schweißverbindungen mit dem ersten Blechelement 1 und dem zweiten Blechelement 2 und optional dem dritten Blechelement 3 verbunden. Die Verstärkungswand 9 kann zudem zusätzlich mit der Hülse 4 verschweißt sein. Die Verstärkungswand 9 verhindert, dass das dritte Blechelement 3 durch die Radnabe eingedrückt wird und erhöht zudem ebenfalls das Widerstandsmoment des Spurhebels 3. Bei einer bevorzugten Ausführungsform können die Steckverbindungen Y8 und/oder die Steckverbindungen Y9 als verschweißte Steckverbindungen ausgeführt werden.

Der Spurhebel S zeichnet sich insbesondere dadurch aus, dass er kostengünstig ist und leichtgewichtig und/oder materialsparend ausgeführt ist, dennoch aber ausreichend steif ist.

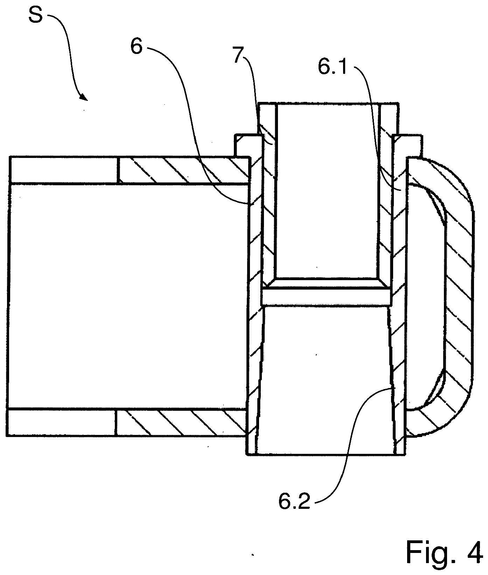

Figur 4 zeigt eine Detailschnittansicht der Hülse 6. Figur 4 ist zu entnehmen, dass die Außenkontur der Hülse 6 zylinderförmig ist, die Innenkontur der Hülse 6 allerdings zweitgeteilt ist, mit einem zylindrischen Teil 6.1 und einem kegelförmigen Teil 6.2. In den zylindrischen Teil 6.1 der Hülse 6 ist die ebenfalls zylindrische Büchse 7 zur Verschraubung mit dem Kopf der Spurstange eingesetzt. Der kegelförmige Teil 6.2 der Hülse 6 dient hingegen zur vorzugsweise formschlüssigen Aufnahme des Kopfs der Spurstange.

Die Erfindung ist nicht auf die oben beschriebenen bevorzugten Ausführungsformen beschränkt. Die Erfindung beansprucht Schutz für den Gegenstand der Haupt- und Unteransprüche

### Bezugszeichenliste

- 1: Erstes Blechelement
- 2: Zweites Blechelement
- 3: Drittes Blechelement
- K1: Kontaktfläche zur Verbindung mit einer Radnabe
- K2: Kontaktfläche zur Verbindung mit einer Radnabe
- 4: Hülse zur Befestigung einer Radnabe
- 5: Hülse zur Befestigung einer Radnabe
- 6: Hülse zur Verbindung mit einer Spurstange
- 6.1: Zylindrischer Teil der Hülse
- 6.2: Kegelförmiger Teil der Hülse
- 7: Büchse zur Verschraubung mit einer Spurstange
- 8: Verstärkungswand
- 9: Verstärkungswand
- S: Spurhebel
- X: Steck- und/oder Hakenverbindungen
- Y8: Steckverbindungen, ggf. verschweißt
- Y9: Steckverbindungen, ggf. verschweißt

## Patentansprüche

1. Spurhebel (S) für eine Lenkmechanik für ein Kraftfahrzeug, vorzugsweise Nutzfahrzeug, **dadurch gekennzeichnet, dass** der Spurhebel (S) ein erstes Blechelement (1), ein zweites Blechelement (2) und ein drittes Blechelement (3) aufweist und das dritte Blechelement (3) mit dem ersten Blechelement (1) und dem zweiten Blechelement (2) verschweißt ist und vorzugsweise Kontaktflächen (K1, K2) zur Verbindung mit einer Radnabe zur Verfügung stellt.

2. Spurhebel (S) nach Anspruch 1, **dadurch gekennzeichnet, dass** das dritte Blechelement (3) als ein gebogenes Blechelement ausgeführt ist, mit einem U-förmigen Abschnitt, von dem sich zwei die Kontaktflächen (K1, K2) aufweisende Seitenabschnitte erstrecken.

3. Spurhebel (S) nach Anspruch 1 oder 2, **dadurch gekennzeichnet, dass** das erste Blechelement (1) und das zweite Blechelement (2) als ebene Blechelemente ausgeführt sind.

4. Spurhebel (S) nach einem der vorhergehenden Ansprüche, **dadurch gekennzeichnet, dass** das erste Blechelement (1) und das zweite Blechelement (2) baugleich, asymmetrisch und/oder U-förmig ausgebildet sind.

5. Spurhebel (S) nach einem der vorhergehenden Ansprüche, **dadurch gekennzeichnet, dass** das dritte Blechelement (3) über Steck- und/oder Hakenverbindungen (X) an das erste Blechelement (1) und das zweite Blechelement (2) gekoppelt ist.

6. Spurhebel (S) nach einem der vorhergehenden Ansprüche, **dadurch gekennzeichnet, dass** das dritte Blechelement (3) einerseits mit einem Randabschnitt an einen Randabschnitt des ersten Blechelements (1) verschweißt ist und andererseits mit einem Randabschnitt an einen Randabschnitt des zweiten Blechelements (2) verschweißt ist.

7. Spurhebel (S) nach einem der vorhergehenden Ansprüche, **dadurch gekennzeichnet, dass** die Kontaktflächen (K1, K2) Durchgangsöffnungen (D1, D2) aufweisen und durch Hülsen (4, 5) zur Verbindung mit der Radnabe unterstützt sind.

8. Spurhebel (S) nach Anspruch 7, **dadurch gekennzeichnet, dass** die Hülsen (4, 5) mit dem ersten Blechelement (1) und dem zweiten Blechelement (2) verschweißt sind.

9. Spurhebel (S) nach einem der vorhergehenden Ansprüche, **dadurch gekennzeichnet, dass** der Spurhebel (S) eine Hülse (6) zur Verbindung mit einer Spurstange umfasst und die Hülse (6) vorzugsweise mit dem ersten Blechelement (1) und dem zweiten Blechelement (2) verschweißt ist.

10. Spurhebel (S) nach Anspruch 9, **dadurch gekennzeichnet, dass** die Hülse (6) zur Verbindung mit der Spurstange eine zweigeteilte Innenkontur mit einem zylindrischen Teil (6.1) und einem kegelförmigen Teil (6.2) aufweist, vorzugsweise aber eine sich zumindest teilweise über den zylindrischen Teil (6.1) und den kegelförmigen Teil (6.2) erstreckende zylindrische Außenkontur.

11. Spurhebel (S) nach Anspruch 10, **dadurch gekennzeichnet, dass** in den zylindrischen Teil (6.1) der Hülse (6) eine Büchse (7) zur Befestigung mit dem Kopf der Spurstange eingesetzt ist und/oder der kegelförmige Teil (6.2) der Hülse (6) zur Aufnahme des Kopfs der Spurstange dient.

12. Spurhebel (S) nach einem der vorhergehenden Ansprüche, **dadurch gekennzeichnet, dass** der Spurhebel (S) eine Verstärkungswand (8) aufweist, die zwischen den Kontaktflächen (K1, K2) angeordnet ist und mittels Steckverbindungen (Y8) und/oder Schweißverbindungen mit dem ersten Blechelement (1), dem zweiten Blechelement (2) und/oder dem dritten Blechelement (3) verbunden ist.

13. Spurhebel (S) nach einem der vorhergehenden Ansprüche, **dadurch gekennzeichnet, dass** der Spurhebel (S) eine Verstärkungswand (9) aufweist, die zwischen einer Hülse (4) zur Verbindung mit der Radnabe und der Hülse (6) zur Verbindung mit der Spurstange angeordnet ist und mittels Steckverbindungen (Y) und/oder Schweißverbindungen mit dem ersten Blechelement (1), dem zweiten Blechelement (2) und/oder dem dritten Blechelement (3) verbunden ist und vorzugsweise zusätzlich mit der Hülse (4) zur Verbindung mit der Radnabe verschweißt ist.

14. Spurhebel (S) nach einem der vorhergehenden Ansprüche, **dadurch gekennzeichnet, dass** das dritte Blechelement (3) rechtwinklig zu dem ersten Blechelement (1) und dem zweiten Blechelement (2) ausgerichtet ist, das erste Blechelement (1), das zweite Blechelement (2) und das dritte Blechelement (3) die dreiseitige Außenkontur des Spurhebels (S) bilden und/oder so angeordnet sind, dass sie einen U-förmigen Querschnitt bilden.

15. Lenkmechanik für ein Kraftfahrzeug, vorzugsweise Nutzfahrzeug, mit einem Spurhebel (S) gemäß einem der vorhergehenden Ansprüche.

## Claims

1. Track-rod arm (S) for a steering mechanism for a motor vehicle, preferably a commercial vehicle, **characterized in that** the track-rod arm (S) comprises a first sheet-metal element (1), a second sheet-metal element (2) and a third sheet-metal element (3) and the third sheet-metal element (3) is welded to the first sheet-metal element (1) and the second sheet-metal element (2) and preferably provides contact surfaces (K1, K2) for connection to a wheel hub.

2. Track-rod arm (S) according to Claim 1, **characterized in that** the third sheet-metal element (3) is embodied as a bent sheet-metal element, having a U-shaped portion, from which two side portions comprising the contact surfaces (K1, K2) extend.

3. Track-rod arm (S) according to Claim 1 or 2, **characterized in that** the first sheet-metal element (1) and the second sheet-metal element (2) are embodied as plane sheet metal elements.

4. Track-rod arm (S) according to one of the preceding claims, **characterized in that** the first sheet-metal element (1) and the second sheet-metal element (2) are of identical, asymmetrical and/or U-shaped construction.

5. Track-rod arm (S) according to one of the preceding claims, **characterized in that** the third sheet-metal element (3) is coupled to the first sheet-metal element (1) and the second sheet-metal element (2) by peg and/or hooked connections (X).

6. Track-rod arm (S) according to one of the preceding claims, **characterized in that** the third sheet-metal element (3) is welded by an edge portion to an edge portion of the first sheet-metal element (1) on the one hand and welded by an edge portion to an edge portion of the second sheet-metal element (2) on the other.

7. Track-rod arm (S) according to one of the preceding claims, **characterized in that** the contact surfaces (K1, K2) comprise passages (D1, D2) and are supported by sleeves (4, 5) for connection to the wheel hub.

8. Track-rod arm (S) according to Claim 7, **characterized in that** the sleeves (4, 5) are welded to the first sheet-metal element (1) and the second sheet-metal element (2).

9. Track-rod arm (S) according to one of the preceding claims, **characterized in that** the track-rod arm (S) comprises a sleeve (6) for connection to a track rod and the sleeve (6) is preferably welded to the first sheet-metal element (1) and the second sheet-metal element (2).

10. Track-rod arm (S) according to Claim 9, **characterized in that** the sleeve (6) for connection to the track rod comprises a divided internal contour having a cylindrical part (6.1) and a tapered part (6.2), but preferably comprises a cylindrical external contour extending at least partially over the cylindrical part (6.1) and the tapered part (6.2).

11. Track-rod arm (S) according to Claim 10, **characterized in that** a bushing (7) is inserted into the cylindrical part (6.1) of the sleeve (6) for attachment to the end of the track rod and/or the tapered part (6.2) of the sleeve (6) serves for locating the end of the track rod.

12. Track-rod arm (S) according to one of the preceding claims, **characterized in that** the track-rod arm (S) comprises a reinforcing wall (8), which is arranged between the contact surfaces (K1, K2) and is connected to the first sheet-metal element (1), the second sheet-metal element (2) and/or the third sheet-metal element (3) by means of peg connections (Y8) and/or welded connections.

13. Track-rod arm (S) according to one of the preceding claims, **characterized in that** the track-rod arm (S) comprises a reinforcing wall (9), which is arranged between a sleeve (4) for connection to the wheel hub and the sleeve (6) for connection to the track rod and is connected to the first sheet-metal element (1), the second sheet-metal element (2) and/or the third sheet-metal element (3) by means of peg connections (Y) and/or welded connections and is preferably additionally welded to the sleeve (4) for connection to the wheel hub.

14. Track-rod arm (S) according to one of the preceding claims, **characterized in that** the third sheet-metal element (3) is aligned at right-angles to the first sheet-metal element (1) and the second sheet-metal element (2), the first sheet-metal element (1), the second sheet-metal element (2) and the third sheet-metal element (3) form the three-sided external contour of the track-rod arm (S) and/or are arranged so that they form a U-shaped cross section.

15. Steering mechanism for a motor vehicle, preferably a commercial vehicle, having a track-rod arm (S) according to one of the preceding claims.

## Revendications

1. Biellette de direction (S) pour un mécanisme de direction de véhicule automobile, de préférence de véhicule utilitaire, **caractérisée en ce que** la biellette de direction (S) comporte un premier élément en tôle (1), un deuxième élément en tôle (2) et un troisième élément en tôle (3) et que le troisième élément en tôle (3) est soudé au premier élément en tôle (1) et au deuxième élément en tôle (2) et met de préférence à disposition les surfaces de contact (K1, K2) pour la liaison avec un moyeu de roue.

2. Biellette de direction (S) selon la revendication 1, **caractérisée en ce que** le troisième élément en tôle (3) est réalisé sous la forme d'un élément en tôle incurvé avec une section en forme de U d'où s'étendent deux sections latérales comportant les surfaces de contact (K1, K2).

3. Biellette de direction (S) selon la revendication 1 ou 2, **caractérisée en ce que** le premier élément en tôle (1) et le deuxième élément en tôle (2) sont réalisés sous la forme d'éléments en tôle plans.

4. Biellette de direction (S) selon l'une quelconque des revendications précédentes, **caractérisée en ce que** le premier élément en tôle (1) et le deuxième élément en tôle (2) sont réalisés de construction identique, asymétriquement et/ou en forme de U.

5. Biellette de direction (S) selon l'une quelconque des revendications précédentes, **caractérisée en ce que** le troisième élément en tôle (3) est couplé au premier élément en tôle (1) et au deuxième élément en tôle (2) via des liaisons enfichées et/ou crochetées (X).

6. Biellette de direction (S) selon l'une quelconque des revendications précédentes, **caractérisée en ce que** le troisième élément en tôle (3) est soudé d'une part à une section de bordure au niveau d'une section de bordure du premier élément en tôle (1) et est soudé d'autre part à une section de bordure au niveau d'une section de bordure du deuxième élément en tôle (2).

7. Biellette de direction (S) selon l'une quelconque des revendications précédentes, **caractérisée en ce que** les surfaces de contact (K1, K2) comportent des ouvertures traversantes (D1, D2) et sont maintenues par des fourreaux (4, 5) pour réaliser la liaison au moyeu de roue.

8. Biellette de direction (S) selon la revendication 7, **caractérisée en ce que** les fourreaux (4, 5) sont soudés au premier élément en tôle (1) et au deuxième élément en tôle (2).

9. Biellette de direction (S) selon l'une quelconque des revendications précédentes, **caractérisée en ce que** la biellette de direction (S) comprend un fourreau (6) pour réaliser la liaison avec une barre de direction et le fourreau (6) est de préférence soudé au premier élément en tôle (1) et au deuxième élément en tôle (2).

10. Biellette de direction (S) selon la revendication 9, **caractérisée en ce que** le fourreau (6) permettant de réaliser la liaison avec la barre de direction comporte un contour intérieur séparé en deux avec une partie cylindrique (6.1) et une partie conique (6.2), de préférence toutefois un contour extérieur cylindrique s'étendant au moins en partie au-delà de la partie cylindrique (6.1) et de la partie conique (6.2).

11. Biellette de direction (S) selon la revendication 10, **caractérisée en ce qu'**une douille (7) servant à la fixation avec la tête de la barre de direction est insérée dans la partie cylindrique (6.1) du fourreau (6) et/ou que la partie conique (6.2) du fourreau (6) permet de loger la tête de la barre de direction.

12. Biellette de direction (S) selon l'une quelconque des revendications précédentes, **caractérisée en ce que** la biellette de direction (S) comporte une paroi de renforcement (8) disposée entre les surfaces de contact (K1, K2) et reliée à l'aide de liaisons enfichées (Y8) et/ou liaisons soudées au premier élément en tôle (1), au deuxième élément en tôle (2) et/ou au troisième élément en tôle (3).

13. Biellette de direction (S) selon l'une quelconque des revendications précédentes, **caractérisée en ce que** la biellette de direction (S) comporte une paroi de renforcement (9) disposée entre un fourreau (4) servant à la liaison avec le moyeu de roue et le fourreau (6) servant à la liaison avec la barre de direction et étant reliée, à l'aide de liaisons enfichées (Y) et/ou de liaisons soudées, au premier élément en tôle (1), au deuxième élément en tôle (2) et/ou au troisième élément en tôle (3) et étant de préférence soudée en sus au fourreau (4) servant à la liaison avec le moyeu de roue.

14. Biellette de direction (S) selon l'une quelconque des revendications précédentes, **caractérisée en ce que** le troisième élément en tôle (3) est orienté à angle droit par rapport au premier élément en tôle (1) et au deuxième élément en tôle (2), que le premier élément en tôle (1), le deuxième élément en tôle (2) et le troisième élément en tôle (3) forment le contour extérieur à trois côtés de la biellette de direction (S) et/ou sont disposés de telle sorte qu'ils forment une section transversale en forme de U.

15. Mécanisme de direction pour un véhicule automobile, de préférence un véhicule utilitaire, avec une biellette de direction (S) selon l'une quelconque des revendications précédentes.
